Europäisches Patentamt

European Patent Office

Office européen des brevets

(11) Publication number: **0 492 791 A2**

# EUROPEAN PATENT APPLICATION

(21) Application number: **91310556.5**

(22) Date of filing: **15.11.91**

(51) Int. Cl.5: **G05D 1/02**

(30) Priority: **25.12.90 JP 413807/90**

(43) Date of publication of application:
**01.07.92 Bulletin 92/27**

(84) Designated Contracting States:
**DE FR GB IT SE**

(71) Applicant: **MACOME CORPORATION**
**Kawano Building 32-6, Nishikamata 7-chome**
**Ohta-ku Tokyo(JP)**

(72) Inventor: **Shimizu, Shigejiro**
**4425 Nishiminowa**
**Ina-shi, Nagano(JP)**

(74) Representative: **Votier, Sidney David et al**
**CARPMAELS & RANSFORD 43, Bloomsbury**
**Square**
**London WC1A 2RA(GB)**

(54) **A transport control apparatus for automated guided vehicles.**

(57) A transport control apparatus for a plurality of automated guided vehicles traveling a transport path having a confluence junction, a turnout or a crossing is comprised of a conductor of a loop-shaped configuration formed to surround the confluence junction, the turnout or the crossing, a magnetic field generating device provided on each of the plurality of automated guided vehicles and generating a magnetic field having a cycle peculiar to each of the automated guided vehicles, a magnetic field detecting device provided on each of the plurality of automated guided vehicles and detecting a magnetic field, wherein when the magnetic field detecting device of a rear automated guided vehicle detects a magnetic field from the loop-shaped conductor induced by the magnetic field generating device of a front automated guided vehicle, the rear automated guided vehicle is halted.

FIG.1

## BACKGROUND OF THE INVENTION

### Field of the Invention

The present invention generally relates to magnetic guiding systems for automated guided vehicles and, more particularly, is directed to a transport control apparatus for a vehicle which employs a magnetic guiding system and which is suitably applied to an automatic (driverless) conveying system in which automated guided vehicles can be automatically guided.

### Description of the Related Art

In the conventional guiding system for guiding movable bodies such as driverless vehicles (hereinafter referred to as automated guided vehicles), in order to prevent collisions of the automated guided vehicles at a confluence junction, a turnout or a crossing, photo-sensors are respectively provided at the entrance and exit of each of the confluence junction, the turnout or the crossing and these photo-sensors are coupled with a traffic control computer. Also, the respective automated guided vehicles are provided with receivers and the transports of the automated guided vehicles are controlled by the radio wave signal from the above-mentioned computer.

In the thus arranged automated guided vehicle guiding system, when it is detected by the computer through the photo-sensor provided at the entrance thereof that one automated guided vehicle is going to enter the confluence junction, the turnout or the crossing, it is determined by the above-mentioned computer whether or not other automated guided vehicle has already entered the confluence junction, the turnout or the crossing. If it is determined by the computer that other automated guided vehicle is in the confluence junction, the turnout or on the crossing, then above one automated guided vehicle is halted and then released from the halted state to advance after it was determined by the computer that the other automated guided vehicle, which has already entered the confluence junction, the turnout or the crossing, reaches to a position at which the other automated guided vehicle can be detected by the photo-sensor provided at the exit, thereby avoiding collisions of the automated guided vehicles at the confluence junction, the turnout or at the crossing.

However, in the above-mentioned conventional automated guided vehicle guiding system, the total hardware cost involving a cost for installing the photo-sensors, a cost for coupling the photo-sensors with the computer, a cost for connecting the computer with the automated guided vehicles is relatively high. Moreover, the program used by the computer to execute the traffic control is comparatively complicated so that, when this automated guided vehicle guiding system is introduced into existing building, factories or the like, then the installation of this guiding system needs relatively plenty of time.

## OBJECTS AND SUMMARY OF THE INVENTION

Accordingly, it is an object of the present invention to provide an improved transport control apparatus for automated guided vehicles in which the aforementioned shortcomings and disadvantages encountered with the prior art can be eliminated.

More specifically, it is an object of the present invention to provide a transport control apparatus for automated guided vehicles in which the hardware cost can be relatively reduced.

Another object of the present invention is to provide a transport control apparatus for automated guided vehicles which can be simplified in arrangement.

A still another object of the present invention is to provide a transport control apparatus for automated guided vehicles which can be installed during a short period of time.

A further object of the present invention is to provide a transport control apparatus for automated guided vehicles in which movable bodies can be prevented from being collided one another.

As an aspect of the present invention, a transport control apparatus for a plurality of automated guided vehicles traveling a transport path having a confluence junction, a turnout or a crossing is comprised of a conductor of a loop-shaped configuration formed to surround the confluence junction, the turnout or the crossing, a magnetic field generating device provided on each of the plurality of automated guided vehicles and generating a magnetic field having a cycle peculiar to each of the automated guided vehicles, a magnetic field detecting device provided on each of the plurality of automated guided vehicles and detecting a magnetic field, wherein when the magnetic field detecting device of a rear automated guided vehicle detects a magnetic field from the loop-shaped conductor induced by the magnetic field generating device of a front automated guided vehicle, the rear automated guided vehicle is halted.

## BRIEF DESCRIPTION OF THE DRAWINGS

A better understanding of other objects, features, and advantages of the present invention will be gained from a consideration of the following detailed description of the preferred embodiments thereof, in conjunction with the figures of the accompanying drawings, wherein:

FIG. 1 is a schematic plan view illustrating a layout of a transport control apparatus for automated guided vehicles according to an embodiment of the present invention;

FIG. 2 is a schematic plan view illustrating a positional relationship between a magnetic field generating coil and a magnetic field detecting coil in an automated guided vehicle forming the transport control apparatus for automated guided vehicles of the present invention;

FIG. 3 is s block diagram showing a control circuit installed in the automated guided vehicle shown in FIGS. 1 and 2;

FIGS. 4A to 4I are respectively waveform diagrams to which references will be made in explaining operation of the transport control apparatus when two automated guided vehicles are going to enter the same confluence junction;

FIG. 5 is a schematic diagram of a principle of the present invention, and to which references will be made in explaining operation of the embodiment of the transport control apparatus; and

FIG. 6 shows a schematic diagram of the transport control apparatus according to another embodiment of the present invention.

## DETAILED DESCRIPTION OF THE PREFERRED EMBODIMENTS

The present invention will now be described with reference to the accompanying drawings.

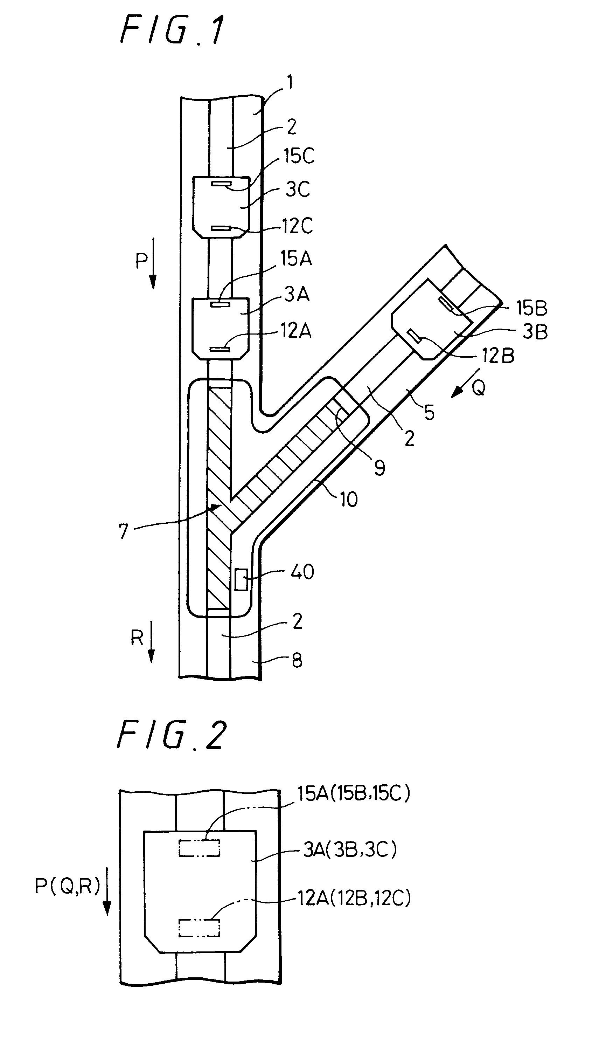

In FIG. 1, reference numeral 1 depicts a transport path and a guiding magnetic tape 2 having N and S poles formed on one and the other surfaces is bonded on the transport path 1. Automated guided vehicles 3A, 3C are on the transport path 1, and these automated guided vehicles 3A, 3C are traveled in the travel direction shown by an arrow P in FIG. 1. Further, an automated guided vehicle $3\overline{B}$ is on a transport path 5 and traveled in the travel direction shown by an arrow $\overline{Q}$ in FIG. 1. The transport paths 1 and 5 are joined with a transport path 8 at a confluence junction 7, whereby the automated guided vehicles 3A to 3C are traveled on the transport path 8 in the travel direction shown by an arrow $\overline{R}$ in FIG. 1.

A hatched area 9 including the confluence junction 7 represents the area such that, if more than two automated guided vehicles are in this hatched area 9 at the same time, there is then the possibility that these automated guided vehicles will be collided one another. This hatched area 9 will hereinafter be referred to as the joining area. A loop coil 10 made of a conductor material or wire is installed so as to surround the joining area 9. The number of turns of the loop coil 10 may be more than one turn and this loop coil 10 may be installed either above or beneath the magnetic tape 2.

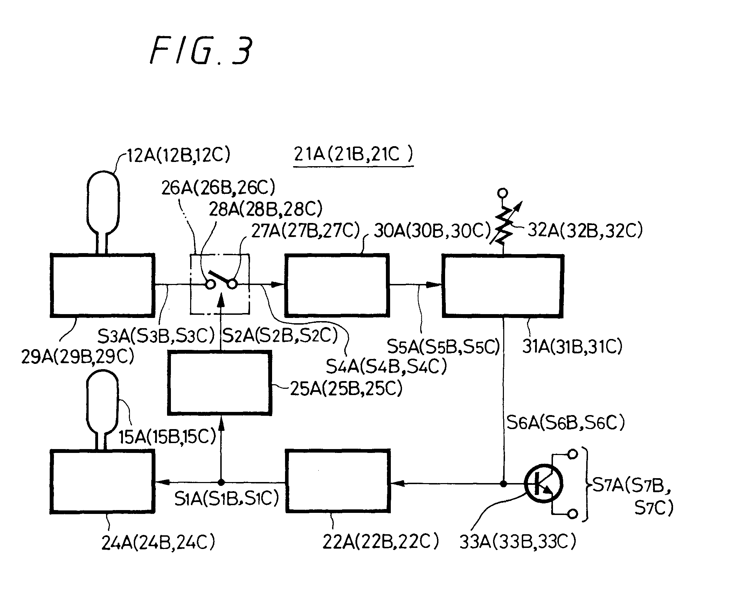

The automated guided vehicles 3A, 3B, 3C are respectively provided with driving devices such as batteries, motors or the like, though not shown. Also, as shown in FIGS. 1 and 2, the automated guided vehicles 3A, 3B, 3C respectively have reception coils 12A, 12B, 12C disposed at their front portions relative to the travel directions P, Q, R in order to receive the magnetic signal from the loop coil 10 and also have transmission coils 15A, 15B, 15C disposed at their rear portions relative to the travel directions P, Q, R in order to transmit the magnetic signal to the loop coil 10. Further, the automated guided vehicles 3A, 3B, 3C include control circuits 21A, 21B, 21C shown in FIG. 3, respectively, and these control circuits 21A, 21B, 21C are respectively connected with the transmission coils 15A, 15B, 15C and the reception coils 12A, 12B, 12C.

As shown in FIG. 3, the control circuits 21A, 21B, 21C respectively include pulse generators 22A, 22B, 22C from which there are derived pulse signals S1A, S1B, S1C. These pulse signals S1A, S1B, S1C have the same pulse duration P1, and cycles T1A, T1B, T1C shown in FIG, 4A. These pulse signals S1A, S1B, S1C are respectively supplied through drivers 24A, 24B, 24C to the transmission coils 15A, 15B, 15C and also fed through single-shot multivibrators 25A, 25B, 25C of pulse duration P0 (cycle thereof is T1 where P1 < P0 < T1A, T1B, T1C) to electronic switches 26A, 26B, 26C formed of gate circuits as gating signals S2A, S2B, S2C, respectively. The cycles T1A, T1B, T1C of the pulse signals S1A, S1B, S1C are respectively set to be different in the automated guide vehicles 3A, 3B, 3C, respectively.

The switches 26A, 26B, 26C are adapted to connect their movable contacts 27A, 27B, 27C to fixed contacts 28A, 28B, 28C when the gating signals S2A to S2C are high in level and to disconnect the movable contacts 27A, 27B, 27C from the fixed contacts 28A, 28B, 28C when the gating signals S2A to S2C are low in level, respectively.

Reception signals S3A, S3B, S3C, which are respectively received by the reception coils 12A, 12B, 12C and amplified by the amplifiers 29A, 29B, 29C, are fed to the fixed contacts 28A, 28B, 28C of the switches 26A, 26B, 26C whose output signals S4A, S4B, S4C are supplied through comparators 30A, 30B, 30C, each having a reference voltage V, to retriggerable single-shot multivibrators 31A, 31B, 31C as output signals S5A, S5B, S5C, respectively. The pulse durations of the retriggerable single-shot multivibrators 31A, 31B, 31C can be varied to predetermined durations by variable resistors 32A, 32B, 32C respectively and these pulse durations are respectively set to P2A, P2B, P2C in response to the automated guided vehicles 3A, 3B, 3C (in a double signs in same order fashion where P2A < P2B < P2C, and T1A to T1C < P2A to P2C). Stop signals S6A, S6B, S6C from these retriggerable single-shot multivibrators 31A, 31B, 31C are respectively supplied to the pulse generators 22A, 22B, 22C and transistors 33A, 33B, 33C.

If the transistors 33A, 33B, 33C are respectively turned on by the stop signals S6A, S6B, S6C of high level, then the automated guided vehicles 3A to 3C are stopped by output signals S7A, S7B, S7C of these transistors 33A, 33B, 33C.

The technology in which the automated guided vehicles are traveled on the magnetic tape bonded to the transport path is well-known and described in Japanese Laid-Open Patent Publication No. 62-184507 (our U.S. Patent No. 4,788,498 and our copending European Patent Application No. 87300744.7), which therefore need not be described herein for simplicity. It is needless to say that the present invention is not limited to the above-mentioned conventional technology in which the automated guided vehicles are traveled on the magnetic tape but may be applied to the technology such that the automated guided vehicles are traveled by effectively utilizing the optoelectronics technology.

Operation of the above-mentioned embodiment will be described below.

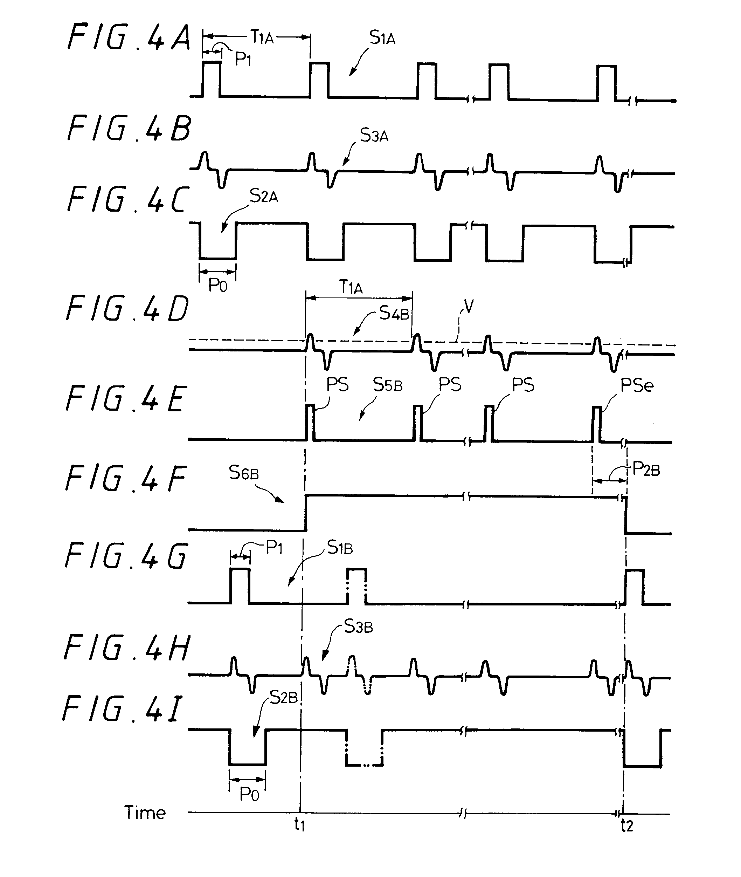

In FIG. 1, let it be assumed that the automated guided vehicles 3A, 3B are traveled on the transport paths 1 and 5 in the travel directions P and Q while detecting the magnetic field of the magnetic tape 2. Then, in any of the automated guided vehicles 3A and 3B, the pulse signals S1A and S1B (see FIGS. 4A and 4G) from the pulse generators 22A and 22B are supplied to the transmission coils 15A and 15B through the drivers 24A and 24B so that magnetic fluxes (or magnetic signals) are generated by the transmission coils 15A and 15B. The thus generated magnetic signals are received by the reception coils 12A and 12B of the automated guided vehicles 3A and 3B, amplified by the amplifiers 29A, 29B and then fed to the fixed contacts 28A and 28B of the switches 26A and 26B as the reception signals S3A and S3B (see FIGS. 4B and 4H), respectively.

In that case, since the gating signals S2A and S2B (see FIGS. 4C and 4I) synchronized with the pulse signals S1A and S1B are supplied from the single-shot multivibrators 25A and 25B to the switches 26A and 26B, respectively, the switches 26A and 26B are opened (i.e., turned off) during the period of the pulse duration P0, whereby the reception signals S3A and S3B are masked, thus placing the output signals S4A and S4B of the switches 26A and 26B in the disabled state. Accordingly, the stop command signals S6A and S6B are kept low in level, thereby allowing the automated guided vehicles 3A, 3B to travel in the travel directions $\overline{P}$ and $\overline{Q}$, respectively. In other words, the automated guided vehicles 3A, 3B (3C) are designed so as not to be stopped in response to the magnetic signals thereof.

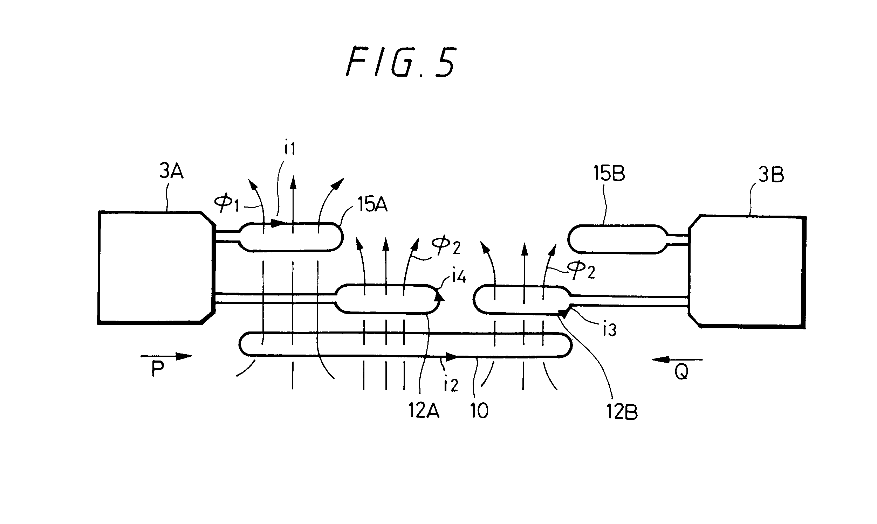

In this state, assuming that the automated guided vehicle 3A enters the area within the loop coil 10 surrounding the junction area 9 at timing point t1, then as shown in FIG. 5 from a principle standpoint, an inductive current i2 based on a magnetic flux ø1 produced by a current i1 which flows through the transmission coil 15A under the condition that the transmission coil 15A of the automated guided vehicle 3A is taken as a primary circuit and the coil 10 of the loop configuration is taken as a secondary circuit is generated in the loop coil 10. Then, a magnetic flux ø2 is generated in the loop coil 10 by this inductive current i2. In the automated guided vehicle 3B which enters the loop coil 10, this magnetic flux ø2 passes through only the reception coil 12B relatively mounted on the automated guided vehicle 3B at the front, thereby an inductive current i3 being generated in the reception coil 12B. Owing to the inductive current i3, a reception signal S3B (synchronized with the pulse signal S1A) shown in FIG. 4H is supplied to the switch 26B (see the timing point t1). In that case, since the gating signal S2B is at high level (see FIG. 4I), the switch 26B is placed in the closed state (i.e., in the on state), whereby this reception signal S3B is supplied to the comparator 30B as an output signal S4B (see FIG. 4D).

The comparator 30B compares this output signal S4B with the reference voltage V (see FIG. 4D) to waveform-shape the former to generate an output signal S5B (see FIG. 4E) of a square wave signal. This square wave output signal S5B is supplied to a retriggerable single-shot multivibrator 31B with the result that the retriggerable single-shot multivibrator 31B generates a stop signal S6B which changes from low to high level at substantially the timing point t1. Since the transistor 33B is turned on by the stop command signal S6B of high level, the automated guided vehicle 3B following behind, which will enter the junction area 9 next, is stopped near the entrance of the junction area 9 by an output signal S7B of the transistor 33B. In that event, since the pulse duration P2B (pulse duration set in response to only one pulse PS of the output signal S5B) of the retriggerable single-shot multivibrator 31B is selected to be longer than the cycle T1A (pulse interval of the output signal S5B), the automated guided vehicle 3B is kept in the stopped state during the pulse PS of the output signal S5B is supplied, in other words, until the front automated guided vehicle 3A, which already entered the junction area 9, goes past the junction area 9.

After a predetermined period of time corresponding to the pulse duration P2B is passed since the last pulse PSe of the output signal S6B has been supplied when the automated guided vehicle 3A goes past the junction area 9, as shown in FIG. 4F, the stop command signal S6B derived from the retriggerable single-shot multivibrator 31 is changed from high to low level. Thus, the automated guided vehicle 3B, which is halted due to the influence of the front automated guided vehicle 3A, starts being traveled one more time. Then, the pulse generator 22B of the automated guided vehicle 3B also is energized so that, this time, the magnetic field of the automated guided vehicle 3B is generated in the loop coil 10. Accordingly, in this state, even if the automated guided vehicle 3C enters the junction area 9, then owing to the similar operation as described above, this automated guided vehicle 3C is halted at the entrance of the junction area 9.

As described above, according to this embodiment, since the reception coils 12A, 12B, 12C are relatively disposed in front of the transmission coils 15A, 15B, 15C, owing to the inductive magnetic field generated by the transmission coil 12A of the front automated guided vehicle 3A which already entered the junction area 9, the automated guided vehicle 3B following behind, which will enter the junction area 9 next, receives the magnetic signal from the loop coil 10 by the reception coil 12B thereof, thereby being stopped reliably. Therefore, the two automated guided vehicles 3A, 3B are inhibited from existing within the junction area 9 at the same time so that the two automated guided vehicles 3A, 3B can be prevented from being collided each other.

If the automated guided vehicles 3B, 3C enter the junction area 9 at the same time during the automated guided vehicle 3A, for example, travels through the junction area 9, then the automated guided vehicles 3B and 3C are both halted. Further, even when the automated guided vehicle 3A goes past the junction area 9 and travels on the transport path 8 side, either the automated guided vehicle 3B or 3C having the shorter pulse duration of the pulse durations P2B, P2C is given a priority over the other to start the travel after the automated guided vehicle 3A goes past the junction area 9 because the pulse durations P2B and P2C of the retriggerable single-shot multivibrators 31B and 31C are different. Therefore, similarly as described above, the two automated guided vehicles 3B, 3C are inhibited from entering the junction area 9 at the same time, thereby being protected from the collision.

Incidentally, in FIG. 1, reference numeral 40 depicts magnetic field generating means such as a coil or the like which is located, for example, within the junction area 9. When this magnetic field generating means 40 is manually operated to generate a magnetic field, then the automated guided vehicle can be halted before entering the junction area 9 similarly as described above. If an object or obstacle, which will disturb the travel of an automated guided vehicle, exists on the transport path 8 after the junction area 9, then the automated guided vehicle may be halted by exciting the magnetic field generating means similarly.

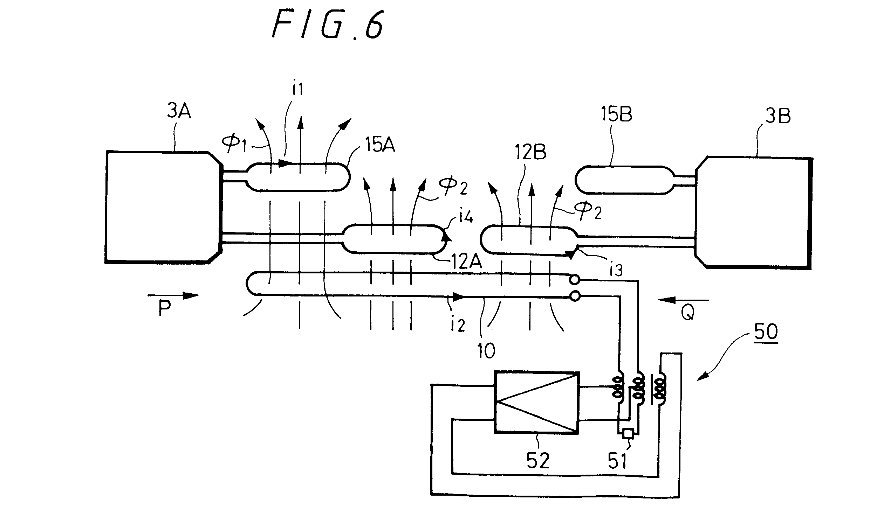

FIG. 6 shows a second embodiment of the transport control apparatus according to the present invention. In FIG. 6, like parts corresponding to those of FIG. 5 are marked with the same references and therefore need not be described in detail.

According to the second embodiment, as shown in FIG. 6, the current i2 flowing through the loop coil 10 is amplified by a tertiary transformer 50, a matching impedance 51 and an amplifier 52, thereby a detection sensitivity at the reception coil 12B being increased. With this arrangement, the transport control apparatus becomes resistant to noise and can be operated more reliably.

According to a first aspect of the present invention, when one automated guided vehicle enters the confluence junction or the like which is surrounded by the loop coil, the magnetic field is generated in the loop coil by the magnetic field generated by the transmission coil of the one automated guided vehicle with the result that the other automated guided vehicle receives the magnetic signal from its loop coil by the reception coil and then guided, thereby the other automated guided vehicle being halted near the entrance of the confluence junction or the like. There is then the effect such that the two automated guided vehicles can be prevented from traveling at the same time in the confluence junction or the like. Therefore, the two automated guided vehicle can be prevented from being collided each other within the confluence junction or the like.

In accordance with a second aspect of the present invention, the pulse durations of the output pulses of timer circuits in the two automated guided vehicles are set to different values so that, when the magnetic signal from the loop coil is simultaneously detected by the respective reception coils of the two automated guided vehicles, the two automated guided vehicles are halted. Therefore, one automated guided vehicle, which has finished its counting of the pulses earlier than the other, is permitted to travel first. Thus, even when more than two automated guided vehicles enter the confluence junction or the like at the same time, these automated guided vehicles can be prevented from being collided one another.

Furthermore, the present invention can achieve the following effects:

(1) Fundamentally, only by forming the loop coil which surrounds the confluence junction, the turnout or the crossing and by disposing the transmission and reception coils on the automated guided vehicle, it is possible to carry out the traffic control by which the automated guided vehicles can be prevented from being collided each other at the confluence junction, the turnout or the crossing;

(2) Since the loop coil functioning as the sensor is the passive element, such loop coil is excellent in reliability as compared with the case such that the active element shown in the prior art is utilized;

(3) Since some special sensors need not be provided in the confluence junction, the turnout or in the crossing, the apparatus of the present invention need not be connected to a computer, thereby saving the connection cost. Also, the computer is not needed;

(4) The apparatus of the present invention can be additionally applied to the existing transport path with ease;

(5) The loop coil used in the present invention is free from the maintenance;

(6) The number of automated guided vehicles can be increased and/or decreased with ease; and

(7) The transport control apparatus of the present invention can be made relatively inexpensive, including the cost of installation process for the transport control apparatus.

Having described the preferred embodiments of the invention with reference to the accompanying drawings, it is to be understood that the invention is not limited to those precise embodiments and that various changes and modifications thereof could be effected by one skilled in the art without departing from the spirit or scope of the novel concepts of the invention as defined in the appended claims.

**Claims**

1. A transport control apparatus for a plurality of automated guided vehicles traveling a transport path having a confluence junction, a turnout or a crossing, comprising:

(a) a conductor of a loop-shaped configuration formed to surround said confluence junction, said turnout or said crossing;

(b) magnetic field generating means provided on each of said plurality of automated guided vehicles and generating a magnetic field having a cycle peculiar to each of said automated guided vehicles;

(c) magnetic field detecting means provided on each of said plurality of automated guided vehicles and detecting a magnetic field, wherein when the magnetic field detecting means of a rear automated guided vehicle detects a magnetic field from said loop-shaped conductor induced by the magnetic field generating means of a front automated guided vehicle, said rear automated guided vehicle is halted.

2. The transport control apparatus according to claim 1, wherein each of said automated guided vehicles includes a timer circuit for measuring a predetermined variable time.

3. The transport control apparatus according to claim 2, wherein said timer circuit is composed of a retriggerable one-shot multivibrator and a variable resistor.

4. The transport control apparatus according to claim 1, wherein said magnetic field generating means is mounted at the rear of each of said automated guided vehicles and said magnetic field detecting means is mounted on the front of each of said automated guided vehicles.

5. The transport control apparatus according to claim 1, wherein each of said automated guided vehicles has its individual signal cycle.

6. The transport control apparatus according to claim 1, further comprising another magnetic field generating means within said confluence junction which can be manually operated.

7. The transport control apparatus according to claim 1, further comprising amplifying means connected to said conductor of a loop-shaped configuration to amplify a current when it is induced in said conductor.

## FIG.1

## FIG.2

7

# FIG. 3

FIG.4A

FIG.4B

FIG.4C

FIG.4D

FIG.4E

FIG.4F

FIG.4G

FIG.4H

FIG.4I

FIG.5

F I G. 6